# EUROPÄISCHE PATENTSCHRIFT

(11) **EP 2 021 890 B1**
(45) Veröffentlichungstag und Bekanntmachung des Hinweises auf die Patenterteilung: **02.10.2019**
(21) Anmeldenummer: 07722429.3
(22) Anmeldetag: 15.05.2007
(51) Int. Cl.: G05B 23/02, F03D 7/02, G01M 5/00, F03D 17/00

(54) **VERFAHREN ZUR ÜBERWACHUNG DER BEANSPRUCHUNG VON ROTORBLÄTTERN VON WINDKRAFTANLAGEN**
METHOD FOR MONITORING THE LOAD ON ROTOR BLADES OF WIND ENERGY INSTALLATIONS
PROCEDE DE SURVEILLANCE DES CONTRAINTES DE PALES DE ROTOR D'EOLIENNES

(30) Priorität: 15.05.2006 DE 102006022884
(43) Veröffentlichungstag der Anmeldung: 11.02.2009
(73) Patentinhaber: Weidmüller Monitoring Systems GmbH, 01099 Dresden (DE)
(72) Erfinder: VOLKMER, Peter, 01109 Dresden (DE)
(74) Vertreter: Kleine, Hubertus
(86) Internationale Anmeldenummer: PCT/DE2007/000881
(87) Internationale Veröffentlichungsnummer: WO 2007/131489

(56) Entgegenhaltungen:
- WO-A-99/36695
- WO-A-02/075153
- DE-A1- 10 065 314
- JEFFRIES W Q ET AL: "Experience with bicoherence of electrical power for condition monitoring of wind turbine blades" IEE PROCEEDINGS: VISION, IMAGE AND SIGNAL PROCESSING, INSTITUTION OF ELECTRICAL ENGINEERS, GB, Bd. 145, Nr. 3, 24. Juni 1998 (1998-06-24), Seiten 141-148, XP006011570 ISSN: 1350-245X

## Beschreibung

Die Erfindung betrifft ein Verfahren zur Überwachung der Beanspruchung von Rotorblättern von Windkraftanlagen mittels Beschleunigungsmessungen an zumindest einem Rotorblatt während des Betriebs der Windkraftanlage und der Ermittlung von Bewertungsgrößen zur Beurteilung der Belastung des Rotorblatts aus den aufgenommenen Beschleunigungs-Signalen.

Rotorblätter gehören mit zu den am höchsten belasteten Komponenten einer Windkraftanlage. Sie sollen den enormen Fliehkräften, Windströmungen und -böen, Turbulenzen, Sonnenstrahlung, unterschiedlichsten Temperaturen sowie Eisansatz über mehrere Jahre im Dauerbetrieb standhalten, um einen wirtschaftlichen Betrieb der Windkraftanlage zu ermöglichen.

Rotorblätter gehören deshalb auch zu den Komponenten mit den höchsten Ausfallraten. Reparaturen und der gegenwärtig noch meist vorgenommene Austausch von Rotorblättern sind sehr kostenintensiv und verursachen große Ertragsausfallzeiten. Aus diesem Grund ist die frühzeitige Erkennung von Schäden in den verschiedenen Bauteilen des Rotorblatts, insbesondere in der aerodynamischen Schale des Rotorblatts und an seinen tragenden Bauteilen im Inneren des Rotorblatts erforderlich.

Das Schadensereignis anzuzeigen ist eine wichtige Information zur Schadensabwehr und vorbeugenden Instandhaltung. Zielführender ist aber, die möglichen Ursachen für Schadensereignisse zu erkennen und abzustellen. Hierzu sind vor allem dynamische Überlasten zu zählen, die durch starke Windänderungen bzw. Turbulenzen und Starkwinde entstehen und dazu führen das die Rotorblätter über das ausgelegte Belastungsmaß hinaus beansprucht und dadurch geschädigt werden können. Bei den dynamischen Lasten handelt es sich um Wechsellasten mit hohen Änderungsgeschwindigkeiten, die deshalb eine Hauptursache von Rotorblattschäden sind.

Dynamische Überlasten können auch entstehen, wenn die Rotorblätter aerodynamisch nicht gleich oder aufeinander abgestimmt sind, z. B. dass die Pitchregelung für ein Blatt nicht passend ist.

Solche Zustände sind daher unbedingt zu vermeiden. In der Regel sind die Pitch-Regelung der Rotorblätter bzw. bei so genannten stall-geregelten Anlagen, bei welchen die Rotorblätter eine feste, bei deren Errichtung vorgenommene Winkeleinstellung aufweisen, die Grundeinstellung der Rotorblätter dafür verantwortlich, die genannten oder vergleichbare Vorkommnisse so auszuregeln, dass die Überbelastungen nicht eintreten.

Die dynamischen Überlasten festzustellen ist daher wichtig, um vorhandene Regelfehler zu erkennen und abzustellen bzw. die Pitch-Regelung aus den Erkenntnissen zu den dynamischen Überlasten zu optimieren. Genauso kann die Grundeinstellung von stall-geregelten Windkraftanlagen überprüft und angepasst werden.

Bisher sind Verfahren und Einrichtungen bekannt geworden, bei denen mit Dehnmessstreifen und in der Wirkung gleichen Glasfasersystemen Dehnungen an bestimmten Stellen in den Rotorblättern gemessen werden, um daraus Lastzustande für jeweils ein gesamtes Rotorblatt zu erfassen und zu bewerten. Die dabei gemessenen Lastzustände sind vom Ansatz her keine Wechsellasten, sondern nur quasi-statische Lasten mit geringen Änderungsgeschwindigkeiten. Dehnmessstreifen weisen im Dauereinsatz jedoch Probleme auf und sind bei gleich bleibender Positionierung schwer auszutauschen. Messungen von Dehnungen mit Glasfasern hingegen sind teuer und irreparabel bei deren Zerstörung aufgrund zu hoher Dehnungen.

Günstiger gestaltet sich die Messung von Beschleunigungen im Rotorblatt mittels Beschleunigungssensoren, wie beispielsweise in der Patentschrift EP 1 075 600 beschrieben. Mit dem Beschleunigungswert hat man grundsätzlich bereits eine lastbezogenen Aussage und darüber hinaus sind Beschleunigungssensoren vergleichsweise preiswert und langlebig sowie bei Schädigung problemlos austauschbar.

Für eine vorbeugende Instandsetzung wird in der DE 100 65 314 A1 eine genauere Bestimmung der Schadensart von Rotorblättern vorgenommen. Dazu werden aus der Bestimmung der Resonanz- und Eigenfrequenzen, welche in Rotorblättern mittels Schwingungserregung erzeugt werden, und deren Vergleich mit vorgehaltenen, definierte Schadenszustände charakterisierenden Referenzspektren verschiedene, auch unkritische Schädigungen der einzelnen Rotorblätter ermittelt. Hierbei erweist es sich jedoch als Nachteil, dass die schädigenden Ereignisse als Einzelereignisse betrachtet werden, die Ermüdung des Materials des Rotorblatts aufgrund häufig auftretender, an sich unkritischer Ereignisse jedoch erst Berücksichtigung finden, wenn sie zu einer Schädigung geführt haben. Somit liegt der Erfindung die Aufgabenstellung zugrunde, ein Verfahren anzugeben, mit welchem dynamische, auch unkritische Lastzustände differenziert erfasst und für eine Bewertung in geeigneter Form zusammengestellt werden können, um möglichst vor Eintritt einer Schädigung am Rotorblatt Einfluss auf die Betriebsweise der Windkraftanlage, insbesondere die Gestaltung der Pichsteuerung bzw. Winkeleinstellung von stall-geregelten Rotorblätter sowohl auf alle Rotorblätter gemeinsam als auch auf ein einzelnes Rotorblatt bezogen, zu nehmen. WO 02/075153 beschreibt ein Verfahren zur Steuerung einer Windenergieanlage.

Diese Aufgabenstellung wird mit einem Verfahren gelöst, welches die Merkmale des Anspruchs 1 aufweist.

Das erfindungsgemäße Verfahren ermöglicht es, sowohl absolute, grenzwertige Aussagen als auch die Häufigkeit von den am Rotorblatt auftretenden dynamischen Lastzuständen zu ermitteln, wobei auf der Erkennung weniger häufiger, aber für sich kritischer dynamischer Lastzustände das Hauptaugenmerk liegt. Durch die laufende Registrierung und Bewertung kurzzeitiger Einzelereignisse werden grenzwertige Häufungen solcher Zustände erfasst.

Die Erkenntnisse können sowohl individuell für jedes Rotorblatt gewonnen werden, woraus wiederum Rückschlüsse auf ggf. falsche Justierungen des Pitch-Winkels oder der Grundeinstellungen für einzelne Rotorblätter gezogen werden können. Das Verfahren ermöglicht aber auch Aussagen über alle Rotorblätter einer Windkraftanlage, z.B. mittels Vergleich der an den einzelnen Rotorblättern auftretenden Belastungen hinsichtlich der Übereinstimmung der Pitch-Winkel- oder Grundeinstellung aller Rotorblätter. Die Analyse des Vergleichs kann z.B. dazu genutzt werden, die Funktionsfähigkeit der Pitch-Regelung zu bewerten.

Die dynamischen Überlasten sind zum einen direkt aus den Beschleunigungsamplituden der Eigenfrequenzen auch höherer Moden und zum anderen auch direkt aus dem Beschleunigungs-Zeit-Signal zu entnehmen. Ein sogenannter Schlag, der eine Überlast anzeigt, stellt sich im Beschleunigungs-Zeit-Signal z. B. als Ensemble von Nadelimpulsen dar und kann über die daraus entnehmbaren charakteristischen Werte in die Bewertung einbezogen werden.

Für die Bewertung der aufgezeichneten Belastungen und Häufigkeiten erfolgt deren Vergleich mit einer Verteilung die den normalen Betrieb charakterisiert, die an einer Windkraftanlage im ungestörten Betrieb aufgenommen wurde.

Da neben den Hauptbelastungsrichtungen in Schlag- und Schwenkrichtung Belastungen auch in anderen Schwingungsrichtungen, z. B. Torsionsschwingungen, auftreten, ist es weiterhin vorteilhaft diese differenziert und auswertbar zur Verfügung zu haben.

Die mit diesem Verfahren aufgenommene Häufigkeitsverteilung der Belastungszustände zeigt eine besonders hohe Häufigkeit für die mit dem Betrieb normalerweise verbundenen Belastungswerte, durch die die Windkraftanlage antreibenden Winde für die die konstruktive Auslegung erfolgte. Weitere Peaks in der Häufigkeitsverteilung weisen auf andere Belastungswerte hin, die immer wieder auftreten. Welche davon bei welcher Häufigkeit zu einer Grenzbelastung führen, die eine Einflussnahme auf den Betrieb der Windkraftanlage, die Veränderung der Regelung, insbesondere der Pitch-Regelung oder Wartung erfordern, ist aus Referenzbetrachtungen, aus Simulationen und/oder der Verbindung des erfindungsgemäßen Überwachungsverfahrens mit solchen Verfahren möglich, bei denen aus den Änderungen des Schwingungsverhaltens auf Änderungen der Eigenschaften des Rotorblatts und auf die Art eines eingetretenen Schadens und dessen Lokalisierung geschlossen wird, wie beispielsweise in der DE 100 65 314 A1 beschrieben.

Eine Verbindung mit diesem Verfahren ist bereits aus dem Grund vorteilhaft, da es ebenfalls die Messung von Beschleunigungen am Rotorblatt durchführt, so dass dessen Messsystem gleichzeitig für das erfindungsgemäße Verfahren nutzbar ist.

Von besonderer Bedeutung bei der Auswertung der Häufigkeit auftretender Belastungen sind die vom Rotorblatthersteller angegebenen Grenzwerte, die auf den Materialeigenschaften und der Art und Zuverlässigkeit der Verbindungen zwischen den einzelnen Bauteilen beruhen. Diese Werte sind stets so bemessen, dass einzelne, geringe Überschreitung noch nicht zu einer Schädigung am Rotorblatt führen. Mit dem erfindungsgemäßen Verfahren sind jedoch häufigere Überschreitungen des Hersteller-Grenzwertes aufzuzeichnen und auszuwerten, so dass eine schädigende Materialermüdung in den Bauteilen oder deren Verbindungen festgestellt werden kann.

Aufgrund der sehr unterschiedlich auftretenden Belastungen mit verschiedenen, dicht beieinander liegenden Belastungswerten ist es vorteilhaft, Bereiche der Belastungswerte zu Belastungsklassen zusammenzufassen und die Häufigkeit des Auftretens von Belastungen, die den einzelnen Klassen zuzuordnen sind, zu ermitteln.

Bestimmt werden kann der Belastungswert beispielsweise aus der Amplitude einer oder mehrere definierter Eigenfrequenzen des Rotorblatts, z. B. der ersten Schlag- und Schwenkfrequenz. Zu diesem Zweck wird aus einem mittels eines Beschleunigungs-Sensors empfangenen zeitabhängigen Signals mittels schneller Fouriertransformation ein Frequenz-Amplituden-Spektrum ermittelt. Die Erzeugung und die Messung des Signals sowie dessen Auswertung zur Ermittlung des Frequenz-Amplituden-Spektrums kann beispielsweise mit dem in der DE 100 65 314 A1 beschriebenen Verfahren und der entsprechenden Einrichtung erfolgen, auf dessen Inhalt hier ausdrücklich verwiesen sein soll.

Entsprechend der oben dargestellten Ermittlung der Häufigkeitsverteilung von diskreten Belastungswerten oder von Belastungsklassen können auch direkt die der Bestimmung der Belastung zugrunde liegenden Beschleunigungs-Amplitudenwerte oder dementsprechend gebildete Beschleunigungs- Amplituden-Klassen für die erfindungsgemäße Überwachung von Rotorblättern verwendet werden. Aufgrund des direkten Zusammenhangs zwischen der auftretenden Belastung und der gemessenen Beschleunigungs-Amplitude der ausgewählten Eigenfrequenz ist auch die Definition einer oder mehrerer Grenzwerte der Häufigkeit des Auftretens einer Amplitude oder Amplitudenklasse als Grenzlast möglich.

Die Verteilungen werden dann auch verwendet, um festzustellen, ob die Pitch-Regelung insgesamt und auch auf das Einzelblatt bezogen, ordnungsgemäß arbeitet.

Die Verteilungen über längere Zeiträume aufgenommen, stellen auch die Lastgeschichte für das Rotorblatt dar und können für die Ermittlung von Schadensursachen herangezogen werden.

Das Verfahren und die dafür erforderliche Vorrichtung sollen in einem Ausführungsbeispiel einer Windkraftanlage mit drei Rotorblättern erläutert werden. Die zugehörige Zeichnung zeigt in
- Fig. 1: die schematische Gesamtansicht einer Windkraftanlage,
- Fig. 2: die schematische Darstellung eines Rotorblattes,
- Fig. 3: einen schematischen Blockschaltplan des erfindungsgemäßen Verfahrens und
- Fig. 4: die Häufigkeitsverteilung der relativen Belastung von drei Rotorblättern einer Windkraftanlage, unterteilt in vier Belastungsklassen.

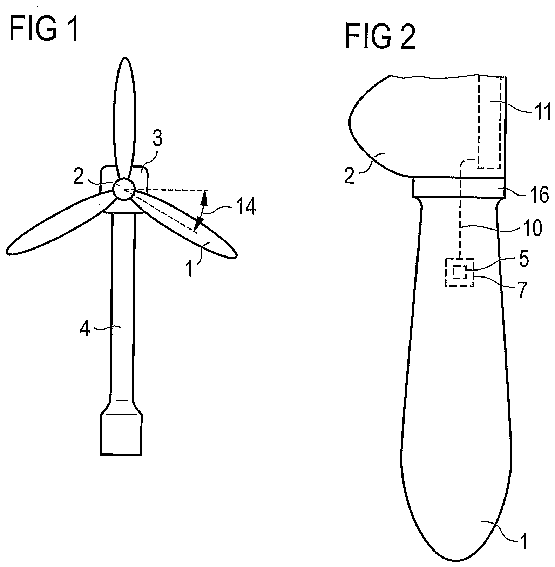

In Fig. 1 ist die Gesamtansicht einer Windkraftanlage mit drei Rotorblättern 1 dargestellt, welche an einer Nabe 2 befestigt sind. Die Nabe 2 wiederum geht in eine horizontal gelagerte Welle über. Die Welle endet in einer Gondel 3, welche die nicht näher dargestellte Maschinentechnik umfasst und am oberen Ende eines Turmes 4 drehbar um eine vertikale Achse angeordnet ist.

In dem dargestellten Ausführungsbeispiel sind gemäß Fig. 2 auf einer inneren Fläche der großflächigen, freien aerodynamischen Schale 6 eines Rotorblattes 1 in seinem unteren, dem Rotorblattfuß 16 zugewandten Drittel zwei eindimensionale Beschleunigungssensoren 5 mit voneinander abweichender Beschleunigungsrichtung fest auf der aerodynamischen Schale 6 des Rotorblattes 1 montiert. Im vorliegenden Ausführungsbeispiel sind ein Beschleunigungssensor 5 mit X-Ausrichtung zur Messung der parallel zur Oberfläche der aerodynamischen Schale 6 verlaufenden Biegeschwingungen und ein Beschleunigungssensor 5 mit Z-Ausrichtung zur Messung der senkrecht zur Oberfläche gerichteten Biegeschwingungen angeordnet. Damit sind die Belastungen in Schlag- und in Schwenkrichtung zu überwachen und durch Kombination beider Sensorsignale auch die Belastungen, die aus Torsionsschwingungen folgen. Die Anordnung beider Beschleunigungssensoren 5 kann auch räumlich getrennt voneinander erfolgen. Alternativ zur Verwendung von zwei Beschleunigungssensoren 5 können auch drei montiert sein, je einer für die X-, die Y- und die Z-Richtung.

Die Beschleunigungssensoren 5 sind über ein im Inneren des Rotorblattes 1 verlaufendes Kabel 10 mit einer Sensor-Versorgungs- und Messwert-Vorverarbeitungseinheit 11 verbunden, welche sich in der Nabe 2 befindet. Die übrigen beiden Rotorblätter der Windkraftanlage sind mit jeweils weiteren Beschleunigungssensoren bestückt, welche ebenfalls über Kabel mit der Sensor-Versorgungs- und Messwert-Vorverarbeitungseinheit 11 verbunden sind.

Die Sensor-Versorgungs- und Messwert-Vorverarbeitungseinheit 11 ist mittels drahtloser Übertragung, z. B. mittels Funkübertragung, mit einer in Fig. 2 nicht näher dargestellten Auswerteeinheit 12 verbunden, die sich in der Gondel 3 oder im Fuß des Turmes 4 befindet und in der Regel über eine Schnittstelle 15 mit weiteren Rechnern 21 vernetzt ist. Die Vorrichtung umfasst des Weiteren ein Betriebsdaten- 18 und ein Meteorologiemodul 17, welche ebenfalls nicht näher dargestellt sind und sich in der Gondel 3, im Turm 4 oder einer anderen, für die Erfassung dieser Daten geeigneten Stelle befindet.

Im Folgenden soll die Messung an einem Rotorblatt 1 einer in Betrieb befindlichen Windkraftanlage beschrieben werden.

Die für die Messung erforderliche Schwingungsanregung erfolgt durch den Betrieb an sich und den dabei auf das Rotorblatt 1 angreifenden Wind. Die an der aerodynamischen Schale 6 des Rotorblattes 1 befestigten Sensoren 5 liefern infolge dieser laufenden Schwingungsanregung elektrische, analoge Signale als zeitbezogene Amplitudensignale, die über die Kabel 10 zur Sensor-Versorgungs- und Messwert-Vorverarbeitungseinheit 11 in der Nabe 2 geführt werden.

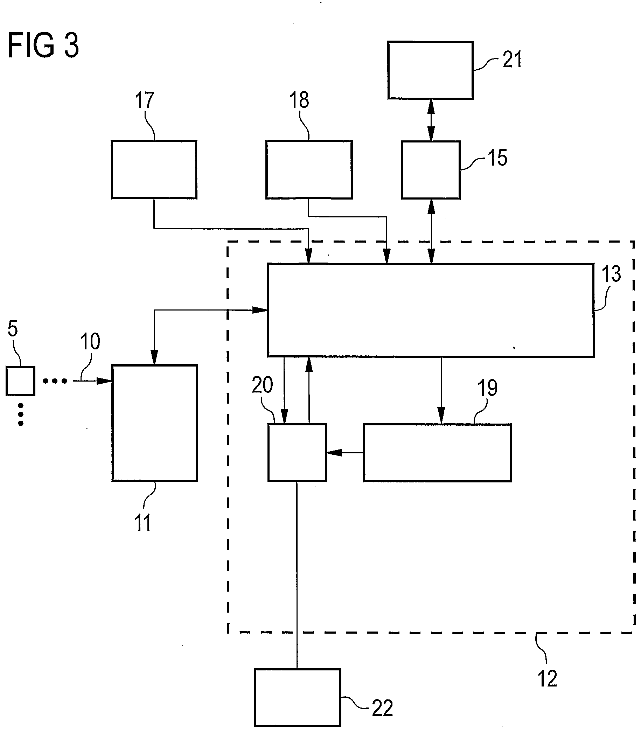

In der Sensor-Versorgungs- und Messwert-Vorverarbeitungseinheit 11, welche gleichzeitig der Sensor-Versorgung dient, erfolgt die Digitalisierung der Signale, die Funkübertragung zur Auswerteeinheit 12, welche eine zentrale Rechnereinheit 13 aufweist (Fig. 3) und auch die Messsteuerung, um eine zuverlässige Steuerung, unabhängig von der Funkübertragung zwischen der Sensor-Versorgungs- und Messwert-Vorverarbeitungseinheit 11 und der zentralen Rechnereinheit 13 zu gewährleisten. In der zentralen Rechnereinheit 13 werden mittels Fouriertransformation aus den aufgenommenen Zeitsignalen pro Messzyklus und je Rotorblatt 1 frequenzabhängige Beschleunigungswerte gewonnen. Mittels geeigneter Methoden wird die erste Eigenfrequenz des n-ten Rotorblattes 1 und damit die Beschleunigungsamplitude und daraus die Belastung bei dieser Frequenz bestimmt.

Auf diese Weise werden parallel auch von den weiteren Rotorblättern 1 der Windkraftanlage frequenzabhängige Amplitudenspektren und daraus die Belastung bei der ersten Eigenfrequenz gewonnen. Diese ermittelten Belastungen jedes Messzyklus werden entsprechend des oder der verwendeten Sensoren 5 für die oben genannten verschiedenen Beschleunigungsrichtungen ermittelt und ausgewertet.

In der zentralen Rechnereinheit werden die numerischen Werte der Belastungen aus jedem der quasikontinuierlich durchgeführten Messzyklen der Sensoren 5 einer Belastungsklasse zugeordnet. Die Belastungsklassen sind durch Belastungsgrenzwerte definiert, die aus Erfahrungswerten bei der Beurteilung von Rotorblattzuständen gewonnen wurden, und sind entsprechend der Erfordernisse und Möglichkeiten zur Einflussnahme auf den Betrieb der Windkraftanlage festgelegt. So wird sich z. B. die Klasseneinteilung bei stall-geregelten Windkraftanlagen von jener für pitch-regelbare Anlagen unterscheiden und zumindest eine Klasse enthalten für normale dynamische Lastereignisse, eine Klasse für erhöhte aber noch zulässige dynamische Lastereignisse und je eine Klasse für dynamische Lastereignisse, welche die Ausgabe einer Warnung sowie eines Alarms erfordern.

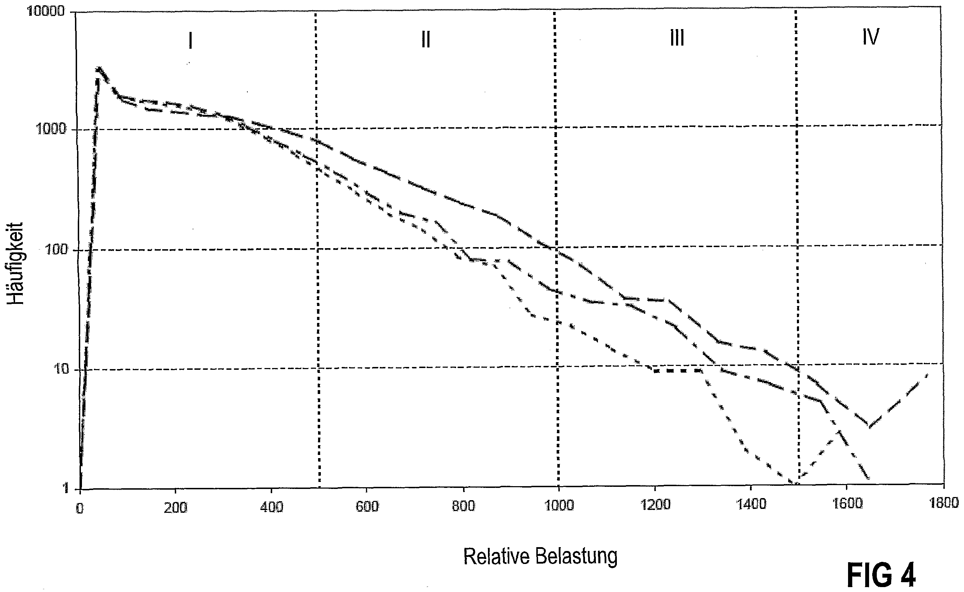

Jede Amplitude stellt ein Belastungsereignis dar, das mit seiner Einteilung in die Belastungsklassen als mehr oder weniger kritisch bewertet wird. Die aus den fortlaufenden Messungen gewonnenen und bewerteten Ereignisse werden klassenbezogen summiert, so dass über einen definierten Zeitraum oder eine definierte Anzahl von Ereignissen die Häufigkeit der Ereignisse pro Klasse für jedes Rotorblatt 1 ermittelt wird (Fig. 4). Zur Bewertung des Einflusses kumulierter Ereignisse auf den Zustand eines Rotorblattes 1 werden dessen Ereignisse einer Klasse auf die Gesamtereigniszahl für dieses Rotorblatt 1 bezogen.

Fig. 4 stellt je eine Häufigkeitsverteilung von Belastungsereignissen der drei Rotorblätter 1 einer Windkraftanlage dar, die im Verlauf eines Monats ermittelt wurden. Die Belastungswerte wurden zur Vergleichbarkeit mit anderen Windkraftanlagen und mit früher gewonnenen Erfahrungswerten normiert und stellen relative Werte dar. Die Häufigkeit der Ereignisse wird auf die Gesamtereigniszahl von 10.000 bezogen und mit fortlaufender Messung gleitend ermittelt.

In Fig. 4 stellt die Belastungsklasse I die Ereignisse mit Normallast, d. h. bei durchschnittlichen Wetter- und Betriebsbedingungen dar. Deren Häufigkeit ist erwartungsgemäß am größten. In der Belastungsklasse II sind Ereignisse erfasst, die aus einer erhöhten jedoch noch zulässigen dynamischen Last herrühren. Deren Häufigkeit ist geringer als die der Ereignisse der Belastungsklasse I. Die Ereignisse der Belastungsklasse III beruhen auf erhöhten dynamischen Lasten, die bereits bei einem geringen Anteil an der Gesamtereigniszahl als kritisch bewertet werden und demzufolge Maßnahmen zur Sicherung des Betriebes der Windkraftanlage bewirken können. Solche Maßnahmen können zum Beispiel die gezielte Suche nach einem möglichen Schaden sein oder die Planung einer mittelfristigen Wartung oder auch eine Korrektur des Pitch-Winkels eines Rotorblattes 1 oder aller Rotorblätter 1 der Anlage. Ereignisse der Belastungsklasse IV hingegen sind bereits für sich oder zumindest mit sehr geringer Häufigkeit derart kritisch zu beurteilen, dass auf den Betrieb der Anlage unmittelbar Einfluss zu nehmen ist, z. B. durch Abschalten oder Pitch-Regelung. Die festgestellte Häufigkeit der Ereignisse dieser beiden letztgenannten Belastungsklassen ist erwartungsgemäß jeweils deutlich geringer als die der jeweils benachbarten, niedrigeren Belastungsklasse.

Im Ausführungsbeispiel ist der Verlauf der Häufigkeitsverteilungen der drei Rotorblätter 1 vergleichbar, so dass darauf geschlossen werden kann, dass keine Einzelschädigung nur eines Blattes vorliegt und auch die Pitch-Regelung aller Rotorblätter 1 im Rahmen zulässiger Toleranzen liegt.

Die Zuordnung einer bestimmten Häufigkeit eines definierten Wertebereichs der Belastung zu einem Rotorblattzustand erfolgt aufgrund von Erfahrungswerten, die in der Auswerteeinheit als Referenzwert hinterlegt werden können. Aufgrund dieser Zuordnung erfolgt bei Erreichen oder Überschreitung des Referenzwertes eine Entscheidung zur Einflussnahme auf die Betriebsweise der Windkraftanlage oder eine unmittelbare Änderung der Betriebsweise.

Dazu wird bei Überschreitung eines zulässigen Häufigkeitswerts ein Signal an ein Betriebsentscheidungsmodul 19 (Fig. 3) übertragen und eine entsprechende Zustandsmeldung wird erzeugt. Die Zustandsmeldung wiederum wird an eine Ein- und Ausgabeeinheit 20 übermittelt, welche Teil der Auswerteeinheit 12 ist und z. B. ein binäres Ausgangsmodul umfasst, über das die Zustandsmeldungen redundant, fremd- und eigensicher an das Anlagensteuerungssystem 22 übergeben werden können. Eine Visualisierung der gemessenen Daten, der abgelegten und der ereignisbezogenen Daten, wird ebenfalls über die Ein- und Ausgabeeinheit 20 oder auch über den Backupserver 21 realisiert, auf den ein dazu berechtigter Nutzer über einen Web-Browser Zugang haben kann.

Alternativ zur Erfassung der Häufigkeit von Belastungswerten können auch die Amplitudenwerte der gemessenen zeitbezogenen Beschleunigung zur Beurteilung der Belastung der einzelnen Rotorblätter und der gesamten Anlage verwendet werden. Dabei werden die Amplitudenwerte für ihre Bewertung auf den Zustand eines Rotorblattes oder der gesamten Anlage mit definierten Belastungswerten hinterlegt, die Auswertung erfolgt jedoch direkt mittels der Amplitudenwerte. Diese werden direkt aus den zeitbezogenen Beschleunigungswerten ermittelt und hinsichtlich der Häufigkeit ihres Auftretens in der oben beschriebenen Weise ausgewertet, um die über einen definierten Zeitraum kumulierten Belastungen und so den Zustand eines oder mehrerer Rotorblätter einer Windkraftanlage zu bestimmen. Als Amplitudenwert wird dafür ein Amplitudenmaximalwert der innerhalb eines Messzyklus aufgenommenen zeitabhängigen Beschleunigungswerte ermittelt. Hinsichtlich der weiteren Auswertung der Amplitudenwerte wird auf die obigen Ausführungen verwiesen.

In verschiedenen Anwendungen kann es erforderlich sein, die Ermittlung der Beanspruchung der Rotorblätter unabhängig von den Körperschallsignalen durchzuführen, die von dem Antriebsstrang der Windkraftanlage auf die Rotorblätter 1 übertragen werden. In diesem Fall können parallel zur Körperschallmessungen der Rotorblätter 1 in der oben beschriebenen Weise mit einem oder vorzugsweise mehreren ein- oder mehrdimensionalen Sensoren 5 bestimmt und ausgewertet werden. Mit diesen Störungsspektren werden dann die Spektren aus den Messungen an den Rotorblättern 1 korrigiert.

Darüber hinaus können während der Zustandsmessung des Rotorblattes 1 durch das System selbst, einem Meteorologiemodul 17 sowie Betriebsdatenmodul 18, aktuelle Messwerte an die zentrale Rechnereinheit 13 übermittelt werden, wie beispielsweise Temperatur des Rotorblattes 1, die Leistung der Windkraftanlage oder ersatzweise die Windgeschwindigkeit und Betriebsdauer des jeweiligen Rotorblattes 1. Damit können in der Auswertung einer Messperiode definierten Belastungswerten bestimmte externe oder anlagenspezifische Einflüsse zugeordnet werden.

Die gewonnenen Daten der Messzyklen der zentralen Rechnereinheit 13 werden in gewissen festen Perioden und bei Ereignissen unmittelbar und mittels Datenfernübertragung über eine geeignete Schnittstelle 15 in einem der zentralen Rechnereinheit 13 unabhängigen Backupserver 21 abgelegt, der wiederum in eine Datensicherung integriert ist.

### Bezugszeichenliste

- 1: Rotorblatt
- 2: Nabe
- 3: Gondel
- 4: Turm
- 5: Sensor, Beschleunigungssensor
- 6: aerodynamische Schale
- 7: Halteplatte, Halterung
- 8: Bewegungsorientierung
- 9: tragende Bauteile
- 10: Kabel
- 11: Sensor-Versorgungs- und Messwert-Vorverarbeitungseinheit
- 12: Auswerteeinheit
- 13: zentrale Rechnereinheit
- 14: Drehwinkel
- 15: Schnittstelle
- 16: Rotorblattfuß
- 17: Meteorologiemodul
- 18: Betriebsdatenmodul
- 19: Betriebsentscheidungsmodul
- 20: Ein- und Ausgabeeinheit
- 21: weiterer Rechner, Backupserver
- 22: Anlagensteuerungssystem
- I, II, III, IV: Belastungsklassen

## Patentansprüche

1. Verfahren zur Überwachung der Beanspruchung von Rotorblättern von Windkraftanlagen mittels Beschleunigungsmessung an zumindest einem Rotorblatt (1) einer Windkraftanlage und der Ermittlung der Belastung des Rotorblatts (1) aus den aufgenommenen Beschleunigungs-Signalen, **dadurch gekennzeichnet, dass** die Beschleunigung in den Zeitsignalen als frequenzunabhängige Größe oder die daraus ermittelten Beschleunigungsamplituden bestimmter EigenFrequenzen als Belastung ermittelt werden und eine Häufigkeitsverteilung von ermittelten Belastungen bestimmt wird, wobei deren Stärke und Häufigkeit des Auftretens einzelner Belastungswerte über einen bestimmten Zeitraum ermittelt und ausgewertet werden.

2. Verfahren zur Überwachung der Beanspruchung von Rotorblättern nach Anspruch 1, **dadurch gekennzeichnet, dass** eine Grenzlast und ein Häufigkeitswert oder eine Verteilung eines vordefinierten Belastungswertes bestimmt wird, bei dessen Erreichen oder Überschreiten eine Entscheidung über die weitere Betriebsweise der Windkraftanlage getroffen wird.

3. Verfahren zur Überwachung der Beanspruchung von Rotorblättern nach Anspruch 2, **dadurch gekennzeichnet, dass** die Entscheidung über die weitere Betriebsweise der Windkraftanlage deren Abschalten betrifft.

4. Verfahren zur Überwachung der Beanspruchung von Rotorblättern nach Anspruch 2, **dadurch gekennzeichnet, dass** die Entscheidung über die weitere Betriebsweise der Windkraftanlage die Einflussnahme auf den Regelalgorithmus der Pitch-Regelung betrifft.

5. Verfahren zur Überwachung der Beanspruchung nach Anspruch 1 oder 2, **dadurch gekennzeichnet, dass** die möglich auftretenden Belastungen in eine Folge von begrenzten Bereichen von Belastungswerten (Belastungsklassen) unterteilt werden und die Häufigkeit des Auftretens der Belastungsklassen ermittelt werden, wobei sich eine Grenzlast als Häufigkeitswert einer vordefinierten Belastungsklasse bestimmt.

6. Verfahren zur Überwachung der Beanspruchung nach einem der vorgenannten Ansprüche, **dadurch gekennzeichnet, dass** die Belastungen aus den Amplituden zumindest einer Eigenfrequenz des Rotorblatts ermittelt werden.

7. Verfahren zur Überwachung der Beanspruchung nach Anspruch 6, **dadurch gekennzeichnet, dass** die Eigenfrequenz eines höheren als der ersten Schwingungsmode ermittelt wird.

8. Verfahren zur Überwachung der Beanspruchung nach Anspruch 6 oder 7, **dadurch gekennzeichnet, dass** die möglich auftretenden Amplituden in eine Folge von begrenzten Bereichen von Amplitudenwerten (Amplitudenklassen) unterteilt werden und die Häufigkeit des Auftretens der Amplitudenklassen ermittelt werden, wobei sich eine Grenzlast als Häufigkeitswert einer vordefinierten Amplitudenklasse bestimmt.

9. Verfahren zur Überwachung der Beanspruchung nach einem der vorgenannten Ansprüche, **dadurch gekennzeichnet, dass** die Häufigkeitsverteilungen für zumindest zwei Rotorblätter einer Windkraftanlage ermittelt und miteinander verglichen werden.

10. Verfahren zur Überwachung der Beanspruchung nach einem der vorgenannten Ansprüche, **dadurch gekennzeichnet, dass** die Bewertung der Amplituden auch dazu genutzt werden kann, bei Überschreitung von Grenzwerten auf die Steuerung der Windkraftanlage Einfluss zu nehmen, z. b. um die Pitch zu verändern, um die Überlast abzubauen.

## Claims

1. Method for monitoring the load on rotor blades of wind power plants by means of acceleration measurement on at least one rotor blade (1) of a wind power plant and determining the load on the rotor blade (1) from the recorded acceleration signals, **characterized in that** the acceleration in the time signals is determined as a frequency-independent variable or the acceleration amplitudes of certain natural frequencies determined therefrom are determined as a load and a frequency distribution of determined loads is determined, wherein the intensity and frequency of the occurrence of individual load values is determined and evaluated over a particular period of time.

2. Method for monitoring the load on rotor blades according to claim 1, **characterized in that** a limit load and a frequency value or a distribution of a predefined load value are determined, on the reaching or transgression of which a decision is made about the further operating mode of the wind power plant.

3. Method for monitoring the load on rotor blades according to claim 2, **characterized in that** the decision on the further operating mode of the wind power plant relates to its shutdown.

4. Method for monitoring the load on rotor blades according to claim 2, **characterized in that** the decision on the further operating mode of the wind power plant relates to influencing the control algorithm of the pitch control.

5. Method for monitoring the load according to claim 1 or 2, **characterized in that** the loads which possibly occur are subdivided into a sequence of limited ranges of load values (load classes) and the frequency of occurrence of the load classes is determined, a limit load being determined as the frequency value of a predefined load class.

6. Method for monitoring the load according to one of the aforementioned claims, **characterized in that** the loads are determined from the amplitudes of at least one natural frequency of the rotor blade.

7. Method for monitoring the load according to claim 6, **characterized in that** the natural frequency of a vibration mode which is higher than the first vibration mode is determined.

8. Method for monitoring the load according to claim 6 or 7, **characterized in that** the amplitudes which possibly occur are subdivided into a sequence of limited ranges of amplitude values (amplitude classes) and the frequency of occurrence of the amplitude classes is determined, a limit load being determined as frequency value of a predefined amplitude class.

9. Method for monitoring the load according to one of the aforementioned claims, **characterized in that** the frequency distributions for at least two rotor blades of a wind power plant are determined and compared with one another.

10. Method for monitoring the load according to one of the aforementioned claims, **characterized in that** the evaluation of the amplitudes can also be used for influencing the control of the wind power plant when limit values are exceeded, e.g. for changing the pitch in order to reduce the overload.

## Revendications

1. Procédé pour la surveillance des contraintes exercées sur des pales de rotor de génératrices éoliennes au moyen d'une mesure de l'accélération sur au moins une pale de rotor (1) d'une génératrice éolienne et de la détermination de la contrainte exercée sur la pale de rotor (1) à partir des signaux d'accélération captés, **caractérisé en ce que** l'accélération est déterminée dans les signaux de temps comme une grandeur indépendante de la fréquence ou les amplitudes d'accélération de certaines fréquences fondamentales déterminées sur cette base sont déterminées comme une contrainte et une répartition de fréquence des contraintes déterminées est définie, la force et la fréquence d'apparition de certaines valeurs de contrainte étant déterminées et analysées sur un certain intervalle de temps.

2. Procédé pour la surveillance des contraintes exercées sur des pales de rotor selon la revendication 1, **caractérisé en ce que** sont déterminées une contrainte limite et une valeur de fréquence ou une distribution d'une valeur de contrainte prédéfinie auxquelles, lorsqu'elles sont atteintes ou dépassées, une décision est prise sur le mode de fonctionnement ultérieur de la génératrice éolienne.

3. Procédé pour la surveillance des contraintes exercées sur des pales de rotor selon la revendication 2, **caractérisé en ce que** la décision du mode de fonctionnement ultérieur de la génératrice éolienne concerne l'arrêt de celle-ci.

4. Procédé pour la surveillance des contraintes exercées sur des pales de rotor selon la revendication 2, **caractérisé en ce que** la décision du mode de fonctionnement ultérieur de la génératrice éolienne concerne une action sur l'algorithme de régulation de la régulation du pas.

5. Procédé pour la surveillance des contraintes selon la revendication 1 ou 2, **caractérisé en ce que** les contraintes qui peuvent apparaître sont subdivisées en une succession de plages de valeurs de contrainte délimitées (classes de contraintes) et la fréquence d'apparition des classes de contraintes est déterminée, une contrainte limite étant déterminée comme valeur de fréquence d'une classe de contraintes prédéfinie.

6. Procédé pour la surveillance des contraintes selon l'une des revendications précédentes, **caractérisé en ce que** les contraintes sont déterminées à partir des amplitudes d'au moins une fréquence fondamentale de la pale de rotor.

7. Procédé pour la surveillance des contraintes selon la revendication 6, **caractérisé en ce que** la fréquence fondamentale d'un mode d'oscillation plus élevé que le premier est déterminée.

8. Procédé pour la surveillance des contraintes selon la revendication 6 ou 7, **caractérisé en ce que** les amplitudes qui peuvent survenir sont subdivisées en une succession de plages de valeurs d'amplitude délimitées (classes d'amplitude) et la fréquence d'apparition des classes d'amplitude est déterminée, une contrainte limite étant déterminée comme valeur de fréquence d'une classe d'amplitude prédéfinie.

9. Procédé pour la surveillance des contraintes selon l'une des revendications précédentes, **caractérisé en ce que** les répartitions de fréquence pour au moins deux pales de rotor d'une génératrice éolienne sont déterminées et comparées entre elles.

10. Procédé pour la surveillance des contraintes selon l'une des revendications précédentes, **caractérisé en ce que** l'analyse des amplitudes peut aussi être utilisée pour agir sur la commande de la génératrice éolienne si des valeurs limites sont dépassées, par exemple pour modifier le pas afin de réduire la surcharge.
